Europäisches Patentamt

European Patent Office

Office européen des brevets

(19)

(11) Publication number: **0 019 005**
B1

(12) **EUROPEAN PATENT SPECIFICATION**

(45) Date of publication of patent specification: **28.03.84**

(51) Int. Cl.³: **A 61 J 3/08, B 29 C 24/00**

(21) Application number: **79101454.1**

(22) Date of filing: **11.05.79**

(54) Method and apparatus for the production of suppository shells.

(43) Date of publication of application:
**26.11.80 Bulletin 80/24**

(45) Publication of the grant of the patent:
**28.03.84 Bulletin 84/13**

(84) Designated Contracting States:
**AT BE CH DE FR GB NL SE**

(56) References cited:
**DE - A - 1 461 946**
**DE - A - 1 479 014**
**DE - A - 2 142 034**
**DE - A - 2 251 724**
**DE - C - 957 159**
**FR - A - 2 201 958**
**US - A - 2 991 500**

(73) Proprietor: **Pozzi, Franco**
**Via Dino Compagni, 3**
**I-20131 Milano (IT)**

(72) Inventor: **Pozzi, Franco**
**Via Dino Compagni, 3**
**I-20131 Milano (IT)**

(74) Representative: **Riccardi, Sergio**
**Riccardi & Co. Via Macedonio Melloni, 32**
**I-20129 Milano (IT)**

## Method and apparatus for the production of suppository shells

The present invention relates to a method allowing to produce shells or envelopes suppositories as well as an apparatus for carrying out said method.

The envelopes or shells for suppositories are consisting of the cell, i.e. the portion having the characteristic shape of an ogive and the volume corresponding to the dosage of pharmaceutical product to be administered, and the bell, i.e. that funnel shaped portion through which filling of the cell is effected and then is closed generally by welding or sometimes by a sealing strip.

The shells are produced by joining two continuous tapes of thermoplastic material and making the cells on them by heating and molding or blowing. As a general rule from each tape two continuous rows of oppositely arranged cells are obtained, which are then generally severed at the moment of preparing the suppositories.

These continuous rows of cells are generally produced by high production machines in a specialized plant, then wound into big rolls or lengths, which are then carried to the pharmaceutical industry providing for preparation of the suppositories. It is clear that the shaped cells, also in view of their particular form, take much space and packing, carrying and storing these rolls are a great part of the cost of suppository shells.

A process and an apparatus of this first kind is described for example in DE—A—1 479 014, in which pressurized air or vacuum shapes the shells, that are arranged in groups parallel to the longitudinal extension of the plastic webs, said air or vacuum being introduced in each group from an opening made at one end of a bottom channel connecting all shells of a group, but it is not possible with such a process and apparatus to preform the shell outline, interrupting the process, storing and supplying the shell blanks, and then completing the shell shaping process at a later stage.

In order to try to avoid these drawbacks, it was devised to carry out the production of the shells at the plant of the pharmaceutical industry using them, joining the machine producing the shells with the preparation line for the suppositories, but this solution too is not advantageous from the economical and technical standpoint, excepting few pharmaceutical industries having a preparation line of very high output, otherwise the cost of such a complicated machine is not justified.

A process and an apparatus of this second kind is described for example in DE—A—2 251 724, in which pressurized air or vacuum shapes the shells, that are arranged in two continuous rows of oppositely arranged cells, said air or vacuum being introduced in a central channel interconnecting all cells of both rows by means of a nozzle penetrating the end of the row, but also in this case it is not possible to divide the process in two parts to be carried out in different times and places.

The present invention removes the drawbacks of both these systems adopted up to now, and is the ideal compromise solution avoiding high costs of carrying already shaped shells and at the same time not requiring the high cost of installing a manufacturing machine at each pharmaceutical industry, thus giving a brilliant compromise which is the ideal solution for everybody but more particularly for pharmaceutical industries of small and medium size.

The method according to the present invention is defined in the accompanying claim 1.

With this method, joining of the tapes is carried out at the plant making the shells, transportation becomes an easy and economic operation without risk of damaging the shells and shaping of the cells is effected at the plant of the pharmaceutical industry preparing the suppositories and this operation may be effected with a very simple apparatus of reduced size and moderate cost, within the reach of any small pharmaceutical industry.

The apparatus for shaping the cells, carrying out the method of the present invention, is defined in the accompanying claim 8.

The apparatus may also provide means for cooling the mould and means for timed advancement of the band, exactly in register with the cavities of the dies.

The advantages and features of the invention will anyway be apparent from the following detailed description of the method as well as of an illustrative embodiment of the apparatus for shaping the cells, given only as a non limiting example of the invention and with reference to the illustrative figures of the accompanying sheets of drawings, in which:

Figs. 1A and 1B jointly taken are a diagram of the several steps of the method according to the present invention;

Fig. 2 is a plan view of a portion of the band formed by the two joined tapes, before shaping the cells by blowing;

Fig. 2B is a similar plan view of a portion of said band, but after shaping of the cells by means of the apparatus of the present invention;

Fig. 3 is a partially sectioned elevational view of the mould shaping the cells, being the main part of the illustrative apparatus of the present invention;

Fig. 4 is a sectioned and enlarged lateral view of the mould shown in Fig. 3;

Fig. 5 is a top plan view of part of the mould and die bearing the suction and blowing systems; and

Fig. 6 is a plan sectional view of a die holding plate showing its cooling system.

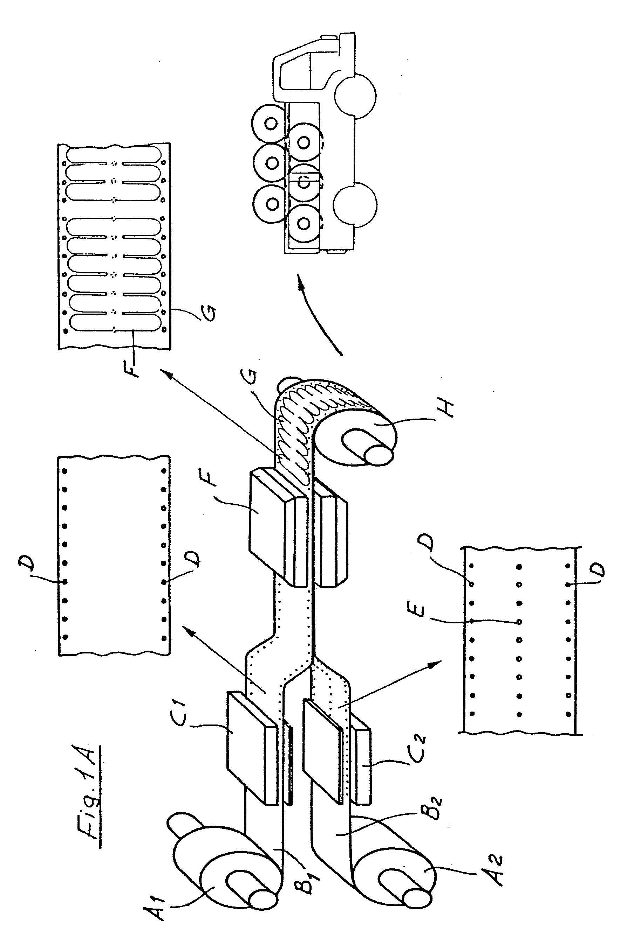

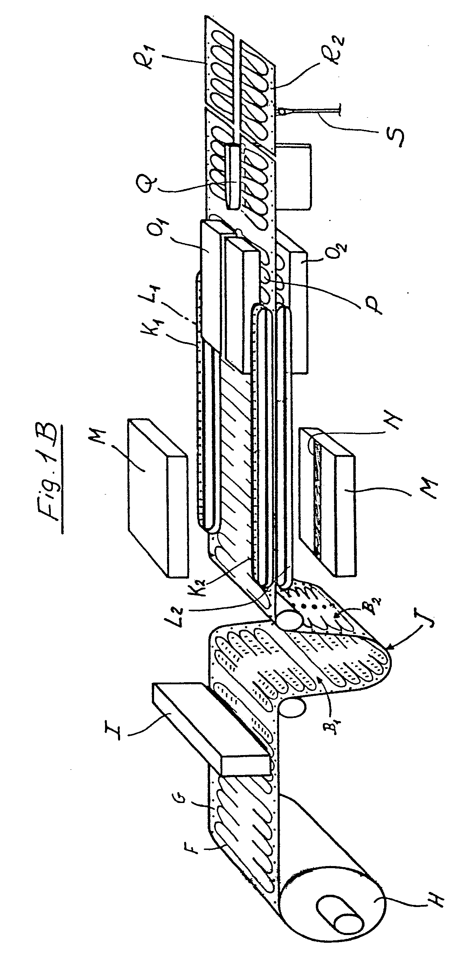

With reference now to the various figures of the accompanying drawings, and examining first Figures 1A and 1B, one can see that the method of the present invention substantially comprises the following steps: starting from two feeding rolls $A_1$ and $A_2$ of a tape of thermoplastic material, two tapes $B_1$ and $B_2$ to be joined, are obtained. The first operation carried out on tapes $B_1$ and $B_2$ is punching by means of suitable punching dies or plates $C_1$ and $C_2$; while one of the tapes $(B_1)$ receives only two rows of punches on the lateral edges, to obtain perforations D like those of photographic or cinematographic films, so as to allow during the step of shaping the cells, the advancement of the tapes in perfect timing and register with the cavities of the shaping die, the other tape $(B_2)$ in addition to said lateral perforations, receives also a row of central perforations E with a spacing equal to that of the outline of the cells to be shaped. Even if it is not strictly necessary, it is certainly preferable that the lateral perforations D and the central perforations E are aligned and have the same spacing. The two tapes $B_1$ and $B_2$ then go to the actual joining step, carried out by electronic or thermal welding F leaving on the joined tapes the flat outline of two oppositely arranged groups of cells, each group containing a number of cells equal to that being produced at each blow of the shaping mould. In this way the band G is obtained, formed by the two joined tapes and bearing the perforations and the outline of the cells to be shaped, as illustrated in Fig. 2A. This band is wound into rolls H or lengths and is therefore ready for being delivered to the user with the minimum possible room consumption.

At the user plant the roll H is unwound and first goes to the printing station I where a printing machine of known type prints the captions on the tape; this operation may be effected at one oppositely arranged twin cell for each blow or by groups of cells. In any case it is preferred that the operation of printing the captions is not strictly bound to the subsequent step of shaping the cells and therefore a loop or reserve J of material is provided between the printing station I and the subsequent steps which are the most important part of the method according to the present invention. In this part of the cycle the band G is caught and entrained by a pair of upper belts $K_1$—$K_2$ and a pair of lower belts $L_1$—$L_2$; one pair of belts is provided with cogs having a spacing equal to that of the lateral perforations D of the band G and are inserted into them, while the other pair of belts has a continuous channel pressing on the band G. With this entrainment system, the band G is moved in perfect timing and register with the station for shaping the cells.

Prior to shaping, the band G is heated at the heating station M by any system adapted to bring the material into a mouldable condition. It has to be pointed out that a device should be provided, adapted to keep cooled the central zone of the tape $B_2$, where the central perforations E are made, so that this zone does not stick to the corresponding zone of the other tape $B_1$ under the influence of heat. As a matter of fact, this is essential in order that the air, which subsequently will be blown, may freely flow along the central channel T formed between the two oppositely arranged rows of cells. This device is preferably formed by a cooled metal blade N or similar thermal screen for this limited zone of the tape $B_2$.

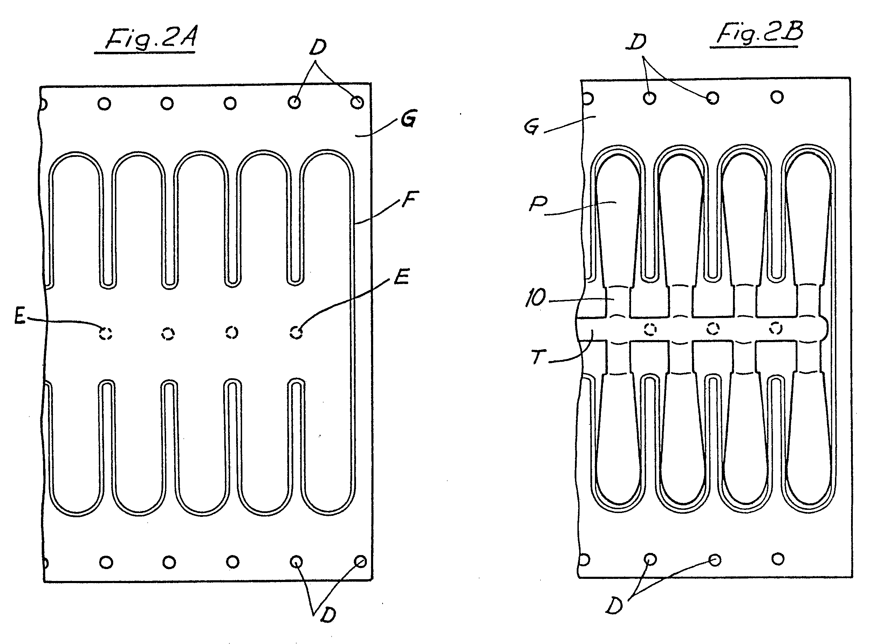

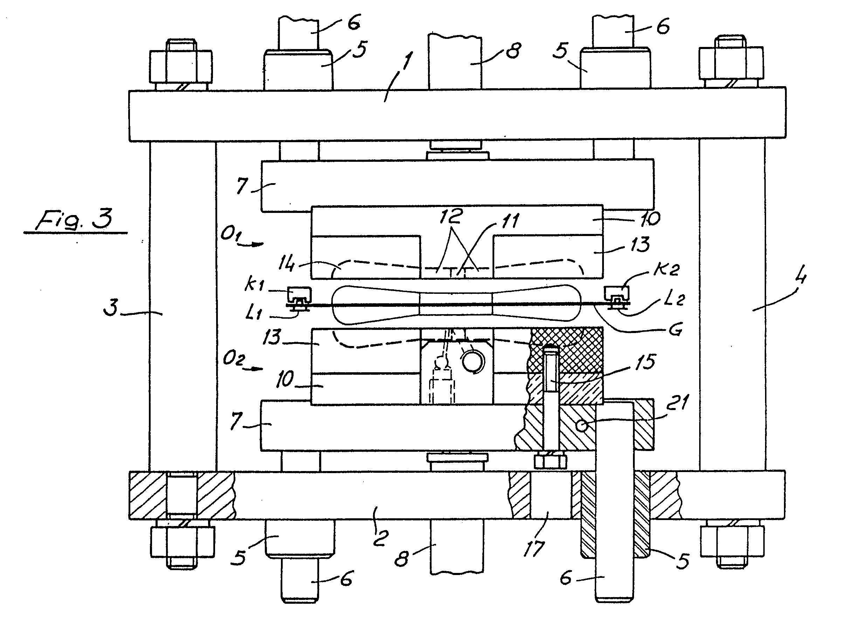

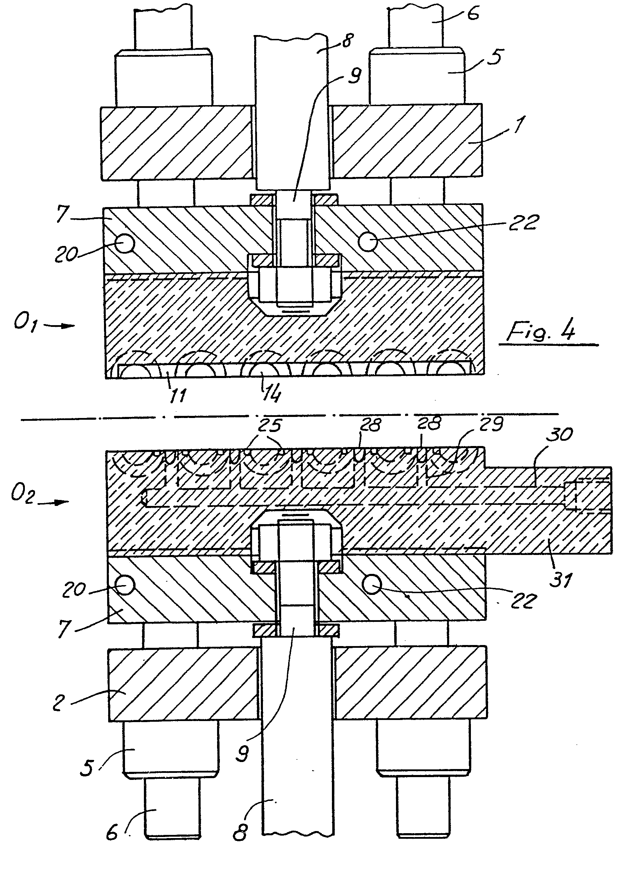

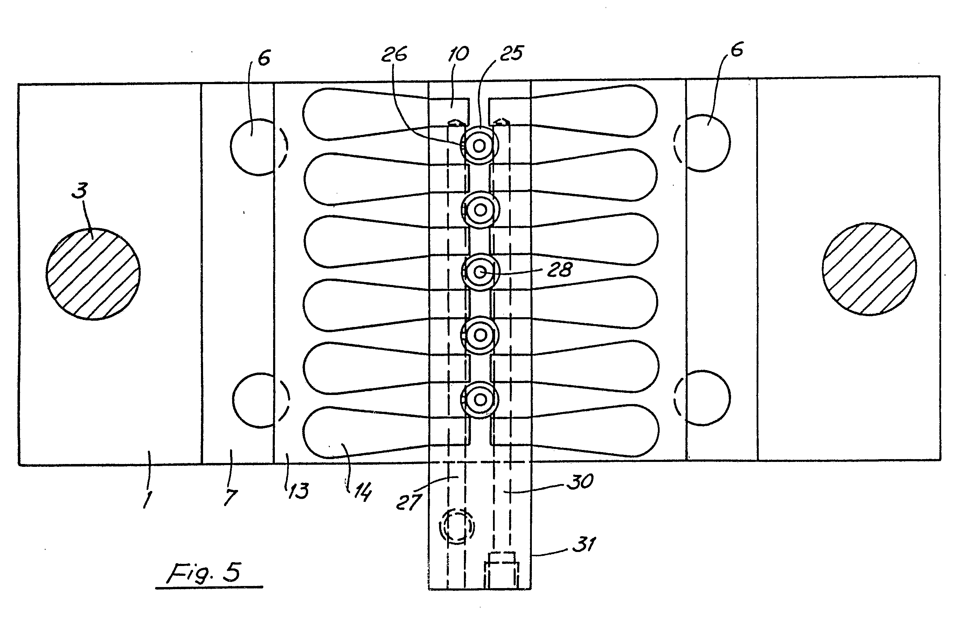

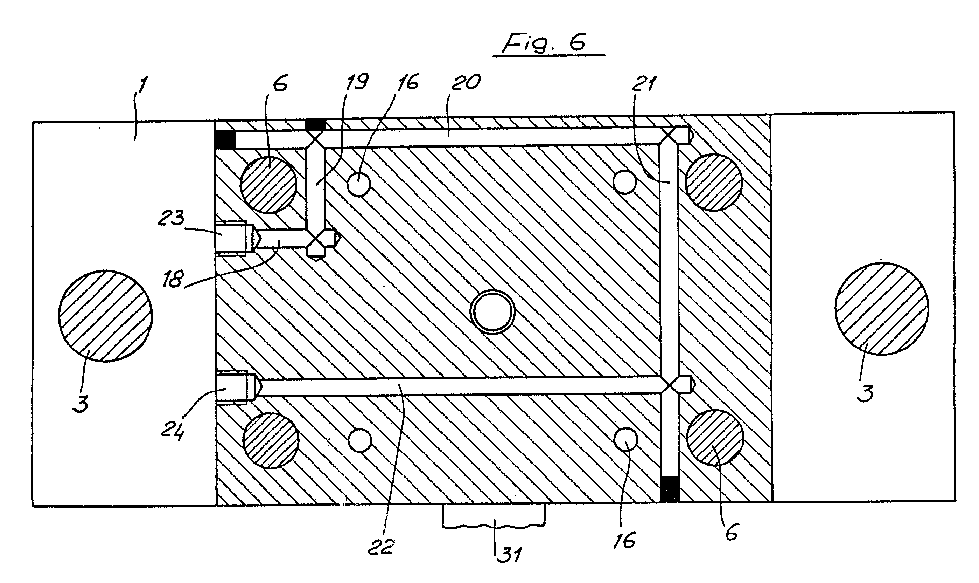

The band G then goes to the shaping station, comprised of the apparatus which will be illustrated in its structural details with reference to Figs. 3—6 of the drawings, and at this shaping station the two dies $O_1$—$O_2$, bearing the cavities of the hemiogives of the cells, clamp the heated band G and shape the cells by blowing. The die $(O_2)$ on which lies the tape $(B_2)$ bearing the central perforations E, has a suction system holding the tape adhering to it, while a blowing system, immediately after suction start, provides to blow air into the central perforations E so as to inflate and shape in the cavities of the dies, the cells whose outline contour is determined by the electronic welding. It has to be noted that the electronic welding determines a general outline of the cell, in which the actual shape and size given by the cavities of the dies may be varied. After each moulding stroke, the band G now bearing the shaped cells P, as shown in Fig. 2B, passes over a slitter Q, so as to obtain two continuous rows $R_1$—$R_2$ of cells, which are received in a suitable vessel or reservoir and thereafter are fed to the preparation line of the suppositories, preferably after being cut into long lengths e.g. of one thousand cells each, by means of a device S counting the cells and cutting the lengths. Of course this device is dispensed with if the operation of cutting into lengths was already carried out by the manufacturer of the joined tapes. Therefore, one can see that the entire cycle is adapted for a continuous and rapid production of shells of suppositories and it is also of great flexibility so as to be suited to the most different requirements of production. The various processing stations are comprised of very simple devices and generally of a type common in the treatment of tapes of plastic materials, excepting the blow shaping apparatus, which although it is very simple, economical and requiring little room, is especially devised for carrying out the method of the present invention and therefore is now described in detail with reference to Figs. 3—6 of the accompanying drawings.

Thus, with reference now to Figs. 3—6 of the accompanying drawings, the apparatus for shaping the cells, diagramatically illustrated in Fig. 1 by dies $O_1$—$O_2$, comprises a rigid support frame formed by crosspieces 1—2 and tierods 3—4. Crosspieces 1—2 bear bushings 5 in which slide the columns 6 supporting the plates or beds 6 which are reciprocated by hydraulic cylinders 8 with their piston rods 9 whose head is secured to the corresponding bed 7. Each bed 7 bears a stationary mould or die 10 having the cavity for the bells 12 of the shells to be shaped, which always have the same sizes, whatever is the volume of the cell or ogive of the shell. On the stationary die 10 the movable lateral dies 13 are applied, containing the cavities for the hemiogives 14 of different sizes according to the type of suppository to be prepared. The movable lateral dies are movably fixed by means of bolts 15 passing through the holes 16 of beds 7 and accessible through the passages 17 made in the crosspieces 1—2. Beds 7 have a cooling system formed by passages 18, 19, 20, 21 and 22 made in their body and ending with the inlet connections 23 and outlet connections 24 for the lines of the cooling fluid circuit. It will be noted that the cooling circuit in the bed 7 is placed toward the inlet edge of the band G coming from the heating station M, so as to cool more the zone which is more subjected to heat.

The die or mould $O_2$ facing the tape $B_2$ provided with the central perforations E has also suction and blowing systems being the main features of the illustrated apparatus. In fact this mould shows, at the center of each distance between two cavities of oppositely arranged bells 12, a groove 25 in the form of a ring provided with a little hole 26 communicating with the passage 27 in turn communicating with the line coming from the source of suction or negative pressure, so as to keep tape $B_2$ adhering during shaping in the die of the mould. At the center of each ring 25 there is the nozzle 28 as outlet of channels 29 communicating with passage 30 feeding pressurized air coming from a suitable source (not shown). It is to be noted that die $O_2$ has a protruding part 31 so as to allow the connection to the lines coming from the suction source and the pressurized air source, respectively. Conversely, the opposite die $O_1$ has a central channel 11 allowing tape $B_1$ to be inflated under the thrust of air coming out from nozzles 28 and to form therein the connection channel for the several cells of the same group. Air cannot escape from the two ends of this channel, as it is hindered by the perimetrical electronic welding of each group of shaped cells. It is to be noted that the groove 25 must perform the function of surrounding the central holes E of tape $B_2$ and therefore may have any suitable perimetrical form, in addition to the circular one, e.g. a square or polygonal form. It is therefore easy to understand that the above described apparatus is a simple and reliable means for forming the cells, allowing to carry out the method of the present invention in a quick and economical manner.

It is also be understood that several variations, modifications, additions and substitutions of elements may be resorted to the method and apparatus of the present invention, without departing however from spirit and scope nor from its protection range, as defined in the appended claims.

## Claims

1. Method for the production of suppository shells, comprising the steps of joining two continuous tapes of thermoplastic material face to face; carrying out joining of the tapes by electronic or thermal welding, at the same time obtaining the outline of two rows of oppositely arranged cells connected with a central channel, which cells and channel are to be shaped, by heating the resulting band and blowing air between the two tapes while they are in a mould so as to inflate and bring the cells to their final shape ready for preparation of the suppositories, characterized by making central holes in one of said tapes before joining it to the other tape, said central holes having a distance one from the other equal to that of the cells of a row, winding the continuous band obtained by the tape joining operation in rolls while the cells are still flat and thus have a minimum of thickness so that the rolls are suitable for storage and transportation, and thereafter blowing the air for said cell shaping operation through said holes made in one of the two tapes.

2. Method according to Claim 1, characterized by the further step of providing, in addition to the central holes made in one of the two tapes, sets or rows of lateral holes in both tapes in register with each other, acting as a clamping system for the tape advancement means, during the cell shaping step.

3. Method according to Claim 1, characterized by the fact that during heating of the band immediately before shaping of the cells, heating of the central zone of the hole bearing tape is hindered to avoid adhesion of the two tapes in such zone.

4. Method according to Claim 1, characterized by the fact that before the heating step, printing of captions of the band is effected.

5. Method according to Claim 1, characterized by the fact that at the same time as air is blown between the two tapes a suction is effected on the hole baring tape, to avoid adhesion between the two tapes and to allow inflation of cells.

6. Method according to Claim 1, characterized by the fact that after shaping of the cells the band is longitudinally slit so as to separate two sets or rows of cells which are oppositely arranged and the band is then cut into lengths adapted to prepare lots of suppositories.

7. Method according to Claim 1, characterized by the fact that each operation of electronic or thermal welding determines the permeter of a group of cells equal to the number of cells which will be formed during each blow shaping operation.

8. Apparatus for producing suppository cells according to the method of Claim 5, comprising a mould made of two die parts ($O_1$—$O_2$) which are ready to enclose the previously heated band (G) formed by the two joined tapes ($B_1$—$B_2$) each die part ($O_1$—$O_2$) substantially comprising halves (1, 4) of cavities of cells (P) to be made, characterized by the fact that the die part ($O_2$), adapted to be contacted with the tape ($B_2$) on which the central holes (E) were previously made, has a suction system keeping the tape adhered thereto during the blowing operation, said system consisting of perimetrical suction grooves (25) surrounding said central holes (E) and connected to a suction source, as well as a blowing system to shape said cells, the blowing system consisting of nozzles (28) arranged at the center of the perimetral suction grooves (25), connection to a source of pressurized fluid, both systems acting on the channel connecting the two opposite rows of cells.

9. Apparatus according to Claim 8, characterized by the fact that the die part ($O_1$) opposite to that ($O_2$) bearing the suction and blowing system, has a central channel (11) for forming the channel (T) connecting the cells (P).

10. Apparatus according to Claim 8, characterized by the fact that each die part ($O_1$—$O_2$) comprises a stationary central die piece (10) for shaping the central channel (Y) and connecting channels connecting the central channel (T) with the cells (P), and lateral interchangeable die pieces (13) for shaping cells of different form and/or volume.

11. Apparatus according to Claim 8, characterized by the fact that each die part (13) is mounted on a bed (7) moved by a pneumatic system and provided with an internal cooling circuit (18—22).

12. Apparatus according to Claim 11, characterized by the fact that each internal cooling circuit (18—22) mainly acts on the edge of the respective die part (13), where the heated band (G) enters the mould.

13. Apparatus according to one or more of the preceding Claims 8 to 12, characterized by the fact of being provided with means for causing timed and synchronized advancement of the band (G), said advancement means consisting of two pairs of belts, wherein one pair ($L_1$—$L_2$) is provided with cogs having a distance equal to that of lateral perforations (D) of the band (G) and being inserted into them, while the other pair ($K_1$—$K_2$) form a continuous channel and press on the said band (G).

**Patentansprüche**

1. Verfahren zum Herstellen von Verpackungs-Behältnissen für Suppositorien, mit den Schritten: Vereinigen von zwei durchgehenden Streifen eines thermoplastischen Materials Fläche gegen Fläche, Durchführen der Verbindung der Streifen mittels Elektronik- oder Wärmeschweißung, gleichzeitiges Erzielen der Kontur von zwei Reihen von entgegengesetzt angeordneten Behältnissen, die mit einem zentralen Kanal in Verbindung stehen, welche Behältnisse samt Kanal ihre Formgestalt durch Erwärmen des erzeugten Bandes und Einblasen von Luft ziwschen die beiden Streifen noch innerhalb einer Form in der Art erhalten, daß die Behältnisse aufgeblasen und in die zum Herstellen der Suppositoren geeignete endgültige Formgestalt gebracht werden, gekennzeichnet durch Anbringen von mittigen Öffnungen in einem der genannten Streifen vor dessen Vereinigung mit dem anderen Streifen, welche mittigen Öffnungen einen gegenseitigen Abstand haben, der gleich demjenigen der Behältnisse einer Reihe ist, Aufwickeln des durch das Verbinden der beiden Streifen erhaltenen durchgehenden Bandes zu Rollen, während die Behältnisse noch flach sind und somit noch eine minimale Dicke haben, so daß die Rollen zur Lagerung und zum Transport geeignet sind und späteres Einblasen der Luft zur Formgestaltung der Behältnisse durch die genannten, in einem der beiden Bänder angebrachten Öffnungen.

2. Verfahren nach Anspruch 1, gekennzeichnet durch den weiteren Schritt Anbringen von Sätzen oder Reihen von seitlichen Öffnungen in genauem gegenseitigen Bezug in beiden Streifen zusätzlich zu den in einem der beiden Streifen mittig angebrachten Öffnungen, welche Öffnungen als Greifmittel für eine Band-Vorrück-Einrichtung während des Behältnis-Formgebungsschrittes dienen.

3. Verfahren nach Anspruch 1, gekennzeichnet durch die Tatsache, daß während des Erwärmens des Bandes unmittelbar vor der Formgebung der Behältnisse eine Erwärmung der zentralen Zone des die Öffnung aufweisenden Streifens verhindert ist, um eine Adhäsion der beiden Streifen in dieser Zone zu vermeiden.

4. Verfahren nach Anspruch 1, gekennzeichnet durch die Tatsache, daß vor dem Schritt Erwärmen das Drucken von Beschriftungen auf dem Band durchgeführt ist.

5. Verfahren nach Anspruch 1, gekennzeichnet durch die Tatsache, daß gleichzeitig mit den Einblasen von Luft zwischen die beiden Streifen auf den die Öffnung aufweisenden Streifen ein Saugen ausgeübt wird, um eine Adhäsion zwischen den beiden Streifen zu vermeiden und um ein Aufblähen der Behältnisse zu ermöglichen.

6. Verfahren nach Anspruch 1, gekennzeichnet durch die Tatsache, daß nach dem Formen der Behältnisse das Band in Längsrichtung aufgeschlitzt wird, um die beiden Sätze oder Reihen von Behältnissen zu trennen, die einander gegenüberliegend angeordnet sind, und daß dann das Band in Längen geschnitten wird, die geeignet sind, Partien von Suppositorien zuzubereiten.

7. Verfahren nach Anspruch 1, gekennzeichnet durch die Tatsache, daß jeder Schritt des Elektronik- oder Wärmeschweißens den Perimeter einer Gruppe von Behältnissen gleich der Anzahl von Behältnissen bestimmt, die während jedes Schrittes der Formgebung durch Aufblasen geformt wird.

8. Vorrichtung zum Herstellen von Verpackungs-Behältnissen für Suppositorien nach dem Verfahren gemäß Anspruch 5, bestehend aus: Einer durch Werkzeugteile ($O_1$—$O_2$) gebildeten Pressform, welche Werkzeugteile das zuvor erwärmte Band (G) umschließen könne, das durch die zwei miteinander verbundenen Streifen ($B_1$—$B_2$) gebildet ist, wobei jedes Werkzeugteil ($O_1$—$O_2$) im wesentlichen Hohl-raum-Hälften (14) der herzustellenden Behältnisse (P) aufweist, dadurch gekennzeichnet, daß das zur Berührung mit dem bereits die mittigen Öffnungen (E) aufweisenden Streifen ($B_2$) kommende Werkzeugteil ($O_2$) ein den Streifen während des Aufblas-Vorganges an dem Werkzeugteil zum Anhaften bringendes Saugsystem hat, daß dieses System aus ringförmig die mittigen Öffnungen (E) umgebenden sowie mit einer Saugwirkung erzeugenden Einrichtung verbundenen Saugnuten (25) gebildet ist, daß ferner ein die Behältnisse (P) formendes Blassystem vorhanden ist, das aus in dem Zentrum der ringförmigen Saugnute (25) wirkenden Tüllen bzw. Düsen (28) besteht, die mit der Quelle eines unter Druck stehenden Fluids verbunden sind und daß beide System auf den Kanal wirken, der die beiden entgegengesetzten Reihen von Behältnissen verbindet.

9. Vorrichtung nach Anspruch 8, dadurch gekennzeichnet, daß das dem Werkzeugteil ($O_2$) mit dem Saug- und Aufblassystem gegenüber-liegende Werkzeugteil ($O_1$) einen mittigen Kanal (11) zum Formen des die Behältnisse (P) verbindenden Kanals (T) aufweist.

10. Vorrichtung nach Anspruch 8, dadurch gekennzeichnet, daß zu jedem Werkzeugteil ($O_1$—$O_2$) ein festes Werkzeug-Mittelteil (10) gehört, um den mittigen Kanal (T) und die verbindenden Kanäle, welche den mittigen Kanal (T) mit den Behältnissen (P) verbinden, auszuformen und ferner austauschbare seitliche Werkzeugteile (13) gehören, um Behältnisse unterschiedlicher Formgestalt und/oder Volumens auszuformen.

11. Vorrichtung nach Anspruch 8, dadurch gekennzeichnet, daß jedes Werkzeugteil (13) an einem Werkzeughalter (7) befestigt ist und daß der Werkzeughalter durch ein pneumatisches System bewegbar sowie mit einem inneren Kühlkreis (18—22) ausgerüstet ist.

12. Vorrichtung nach Anspruch 11, dadurch gekennzeichnet, daß ein jeder der inneren Kühlkreise (18—22) im wesentlichen auf die Kante des jeweiligen Werkzeugteiles (13) einwirkt, an der das erwärmte Band (G) in die Form eingeführt wird.

13. Vorrichtung nach einem oder mehreren der vorhergehenden Ansprüche 8—12, dadurch gekennzeichnet, daß eine Einrichtung zum zeitlich abgestimmten und synchronisierten Vorwärtsbewegen des Bandes (G) vorgesehen ist, daß die Vorrück-Vorrichtung aus zwei Riemen-Paaren besteht, wovon ein Paar ($L_1$—$L_2$) mit Noppen versehen ist, die eine gegenseitige Entfernung haben, die derjenigen von zuvor seitlichen in dem Band (G) angebrachten Lochungen entspricht, während das andere Paar ($K_1$, $K_2$) einen endlosen Kanal bildet und auf das Band (G) drückt.

**Revendications**

1. Procédé de fabrication de coques de suppositoires incluant une étape de réunion de deux rubans continus de matériau thermoplastique face à face, une étape de réunion des rubans par une soudure thermique ou électronique et d'obtention simultanée du contour de deux rangées tête-bêche de cellules connectées à un canal central, lesdites cellules et canal étant à conformer par chauffage de la bande résultante et une étape de soufflage d'air entre les deux rubans alors qu'ils sont dans un moule de manière à les gonfler et conformer les cellules dans leur forme finale prête pour la préparation de suppositoires, caractérisé en ce que:

— des trous centraux sont formés dans l'un desdits rubans avant la réunion avec l'autre ruban, lesdits trous centraux ayant une distance respective égale à celle des cellules d'une rangée, la bande continue obtenue par la réunion des rubans étant enroulée en rouleaux alors que les cellules sont encore plates et n'ont ainsi qu'une épaisseur minimum, de sorte que les rouleaux peuvent être facilement stockés et transportés, le soufflage de l'air à travers lesdits trous formés dans l'un des deux rubans pour l'opération de conformation de cellules, n'intervenant qu'ultérieurement.

2. Procédé selon la revendication 1, caractérisé en ce qu'il comprend une étape supplémentaire, consistant à former, outre les trous centraux prévus dans l'un des deux rubans, des rangées ou ensembles de trous latéraux dans les deux rubans, en regard l'un de l'autre, jouant le rôle de moyens de saisie pour les moyens d'avancement du ruban, durant l'étape de conformation de la cellule.

3. Procédé selon la revendication 1, caractérisé en ce que durant le chauffage de la bande immédiatement avant la conformation des cellules, le chauffage de la zone centrale du ruban portant les trous est inhibé pour éviter l'adhérence des deux rubans dans cette zone.

4. Procédé selon la revendication 1, caractérisé en ce que l'impression des indications sur la bande est effectuée avant l'étape de chauffage.

5. Procédé selon la revendication 1, caractérisé en ce que en même temps que le soufflage de l'air, une succion est effectuée sur le ruban porteur de trous pour éviter l'adhérence entre les deux rubans et pour permettre le gonflage des cellules.

6. Procédé selon la revendication 1, caractérisé en ce que après la conformation des cellules, la bande est coupée longitudinalement pour séparer les deux ensembles ou rangées de cellules qui sont disposés tête-bêche et en ce que la bande est ensuite coupée en longueurs adaptées à la préparation de lots de suppositoires.

7. Procédé selon la revendication 1, caractérisé en ce que chaque opération de soudure thermique ou électronique détermine le périmètre d'un groupe de cellules égales au nombre des cellules qui seront formées durant chaque opération de conformation par soufflage.

8. Appareil pour la production de suppositoires selon la procédé de la revendication 5, comprenant un moule constitué de deux parties de matrices (O1—O2) prêtes à emprisonner la bande (G) préalablement chauffée et formée de deux rubans réunis (B1—B2), chacune des parties de matrices (O1—O2) comprenant sensiblement des moitiés (14) de cavités de cellules (P) à réaliser, caractérisé en ce que la partie (O2) de matrices, adaptée à être amenée au contact avec le ruban (B2) sur lequel des trous centraux (E) ont été préalablement réalisés, présente des moyens de succion maintenant le ruban collée durant l'opération de soufflage, lesdits moyens consistant en des rainures périphériques d'aspiration (25) entourant lesdits trous centraux (E) et connectés à une source de succion, ainsi que des moyens de soufflage pour conformer lesdites cellules, les moyens de soufflage consistant en des buses (28) disposées au centre des rainures périphériques de succion (25), connectées à une source de fluide sous pression, les deux moyens agissant sur le canal connectant deux rangs opposés de cellules.

9. Appareil selon la revendication 8, caractérisé en ce que la partie de matrice (O1) opposée à la partie (O2) portant les moyens d'aspiration et de soufflage présente un canal central (11) pour former le canal (T) reliant les cellules (P).

10. Appareil selon la revendication 8, caractérisé en ce que chaque partie (O1—O2) de matrice, comprend une pièce centrale fixe (10) pour conformer le canal central (T) et des canaux de connexion, connectant le canal central (T) avec les cellules (P) et, des pièces de matrice (13) latérales interchangeables pour conformer des cellules de forme et/ou de volume différents.

11. Appareil selon la revendication 8, caractérisé en ce que chaque partie (13) de matrice est montée sur un lit (7) déplacé par des moyens pneumatiques et pourvu d'un circuit (18—22) de refroidissement interne.

12. Appareil selon la revendication 11, caractérisé en ce que chaque circuit de refroidissement (18—22) agit principalement sur le bord des parties (13) de matrice où la bande chauffée (G) entre dans le moule.

13. Appareil selon une ou plusieurs des revendications précédentes 8 à 12, caractérisé en ce qu'il est pourvu de moyens permettant l'avance temporisée et synchronisée de la bande (G), les moyens d'avancement consistant en deux paires de courroies, l'une des paires (L1—L2) étant pourvue de picots selon un pas égal à celui des perforations latérales (D) de la bande (G) et étant insérés dans les perforations alors que l'autre paire (K1—K2) forme un canal continu et presse sur ladite bande (G).

Fig.1A

Fig.1B

Fig.2B

Fig.2A

Fig. 3

0 019 005

Fig. 4

Fig. 5

Fig. 6